# EUROPEAN PATENT SPECIFICATION

(11) **EP 2 778 870 B1**
(45) Date of publication and mention of the grant of the patent: **13.12.2017**
(21) Application number: 14158773.3
(22) Date of filing: 11.03.2014
(51) Int. Cl.: G06F 9/54, G06F 3/0486, G06F 3/0488, G06F 9/44

(54) **Method and apparatus for copying and pasting of data**
Verfahren und Vorrichtung zum Kopieren und Einfügen von Daten
Procédé et appareil permettant de copier et coller des données

(30) Priority: 11.03.2013 KR 20130025583
(43) Date of publication of application: 17.09.2014
(73) Proprietor: Samsung Electronics Co., Ltd., Suwon-si, Gyeonggi-do, 443-742 (KR)
(72) Inventor: Lee, Da-Som, Seoul (KR); Song, Se-Jun, Seoul (KR); Han, Young-Eun, Gyeonggi-do (KR)
(74) Representative: Nederlandsch Octrooibureau

(56) References cited:
- US-A1- 2012 293 421

## Description

### BACKGROUND

### 1. Field of the Disclosure

The present disclosure relates to electronic devices and more particularly to a method and apparatus for copying and pasting of data.

### 2. Description of the Related Art

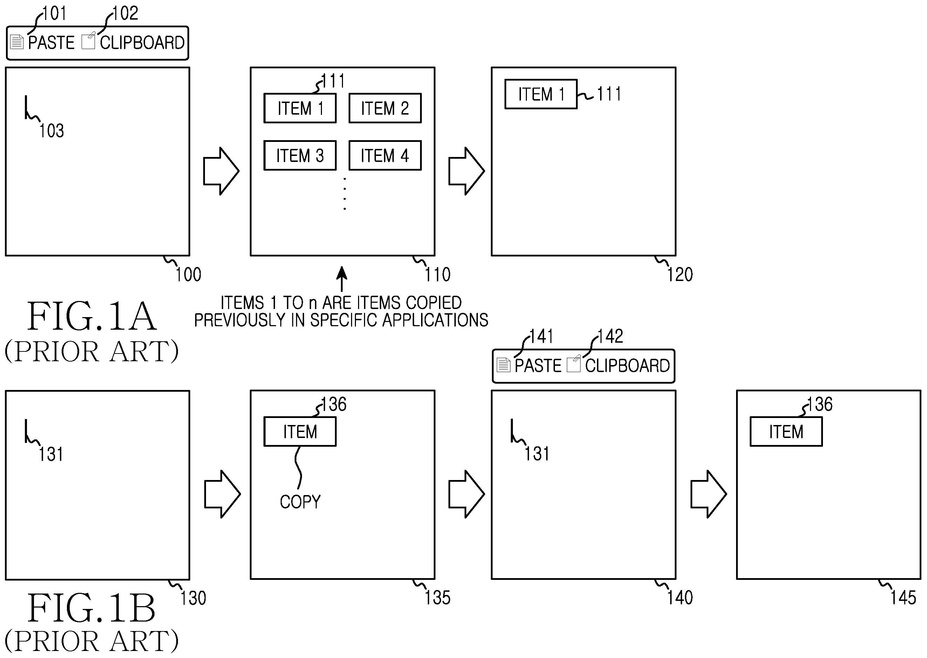

FIGs. 1A and 1B illustrate a cut/paste or copy/paste function according to the conventional technique.

Referring to FIG. 1A, when an object (e.g., a character string, an image, etc.) pre-stored in a clipboard is pasted to a cursor position 103 in a specific application (e.g., a memo pad, a document editor program, etc.) 100, a touch may be maintained for a specific time at the cursor position 103, or when a menu is selected, a "Paste" 101 and a "Clipboard" 102 are displayed. When the paste 101 is selected, a last copied object (e.g., a character string, an image, etc.) is directly displayed at the cursor position 103, and when the clipboard 102 is selected, objects copied in the clipboard are displayed (as indicated by a reference numeral 110). In this case, when a user selects an item#1 111 among items in the clipboard, the selected item#1 111 is displayed at the cursor position 103 in the specific application (e.g., the memo pad, the document editor program, etc.) 100 (as indicated by a reference numeral 120). That is, before the paste is performed, the character string or image must be copied and stored in advance to the clipboard.

If there is no object to be pasted in the clipboard, as illustrated in FIG. 1B, the user must copy a to-be-pasted object by changing to another application including the to-be-paste object.

Referring to FIG. 1B, when an object to be pasted at a cursor position 131 does not exist in a clipboard in an application 130 currently being executed or if the to-be-pasted object is not copied, the application is changed to a different application 135 including the to-be-pasted object, and an item 136 in the different application 135 is selected and copied. Thereafter, the application is changed back to the application 130, a "Paste" 141 and a "Clipboard" 142 are displayed at the cursor position 131, and the item 136 is displayed at the cursor position 131 by selecting either the "Paste" 141 or the "Clipboard" 142.

As described above, conventionally, in order for the current application to use data stored in the different application, a data copy operation must always be first performed in advance at a position of original data. That is, data is pasted after the data is copied according to a position of the data to be copied. If multitasking is supported, a display operation may be performed by executing another application other than an application for performing a main task, but a screen change occurs several times to perform a copy/paste or cut/paste function. In particular, when several pieces of data are pasted, the screen change occurs more frequently.

Although a clipboard can be used when a plurality of pieces of data are copied, the pieces of data individually copied in the clipboard must be pasted separately, which causes inconvenience in use.

US 2012/293421 discloses a method comprising detecting a gesture input via a user interface; identifying an operating system operation that corresponds to the gesture; performing the operating system operation; identifying an application running on the operating system that has subscribed to gesture input; and passing data corresponding to the gesture to the application for use by the application, wherein the data may be passed via an application programming interface (API) for the operating system and may be used by the application to perform an application operation that is different from the operating system operation and wherein the operating system operation may include at least one of opening the application, copying data, pasting data to the application, deleting data, and moving data.

Accordingly, the need exists for new techniques of copying and pasting data.

### SUMMARY

The present disclosure addresses this need as claimed in claims 1-8. According to one aspect of the disclosure, a method is provided comprising: detecting a first gesture performed while a cursor is placed in an input field in a first application; displaying an application list in response to the first gesture; detecting a selection of a second application from the application list; opening a first file with the second application and displaying a content of the first file; detecting a second gesture being performed on a portion of the content of the first file; and inserting the portion of the content of the first file into the input field of the first application.

According to another aspect of the disclosure, an electronic device is provided comprising a processor configured to: detect a first gesture performed while a cursor is placed in an input field in a first application; display an application list in response to the first gesture; detect a selection of a second application from the application list; opening a first file with the second application and displaying a content of the first file; detect a second gesture being performed on a portion of the content of the first file; and insert the portion of the content of the first file into the input field of the first application.

According to yet another aspect of the disclosure, a method is provided for copying and pasting data in an electronic device, the method comprising: detecting a selection of a paste position in a first application; displaying an application list after the paste position is selected; detecting a selection of a second application from the application list; opening a file with the second application and displaying a content of the file; detecting a selection of a portion of the content of the file; and displaying the portion of the content of the file at the paste position.

According to yet another aspect of the disclosure, an electronic device is provided comprising a processor configured to: detect a selection of a paste position in a first application; display an application list after the paste position is selected; detect a selection of a second application from the application list; open a file with the second application and displaying a content of the file; detect a selection of a portion of the content of the file; and display the portion of the content of the file at the paste position.

According to yet another aspect of the disclosure, a method for copying and pasting data in an electronic device is provided, the method comprising: detecting a selection of a paste position in a first application; displaying an application list after the paste position is selected; detect a selection of a second application from the application list; displaying a content by using the second application; detecting a gesture selecting the content as the content is displayed using the second application; and pasting the content at the paste position in the first application in response to the gesture; wherein the gesture serves as both an instruction to copy the content and an instruction to paste the content.

### BRIEF DESCRIPTION OF THE DRAWINGS

The above and other aspects, features and advantages of certain exemplary aspects of the present disclosure will be more apparent from the following detailed description taken in conjunction with the accompanying drawings, in which:
FIGs. 1A and 1B illustrate a cut/paste or copy/paste function according to the conventional technique;
FIGs. 2A to 2G are diagrams depicting an example of a user interface for performing a copy/paste function according to aspects of the present disclosure;
FIG. 3 is a flowchart of an example of a process according to aspects of the disclosure;
FIGs. 4A to 4G are diagrams depicting another example of a user interface for performing a copy/paste function according to aspects of the present disclosure; and
FIG. 5 is a block diagram of an example of an electronic device according to aspects of the present disclosure.

### DETAILED DESCRIPTION ASPECT

Aspects of the present disclosure will be described herein below with reference to the accompanying drawings. In the following description, well-known functions or constructions are not described in detail since they would obscure the disclosure in unnecessary detail. Also, the terms used herein are defined according to the functions of the present disclosure. Thus, the terms may vary depending on the user's or operator's intent and usage. That is, the terms used herein must be understood based on the descriptions made herein. Further, like reference numerals denote parts performing similar functions and actions throughout the drawings.

The present invention described hereinafter relates to a copy/paste method and apparatus in an electronic device. In particular, the present invention may be classified into a part of loading an application including an object to be copied at a paste position and a part of displaying the copped object at the paste position.

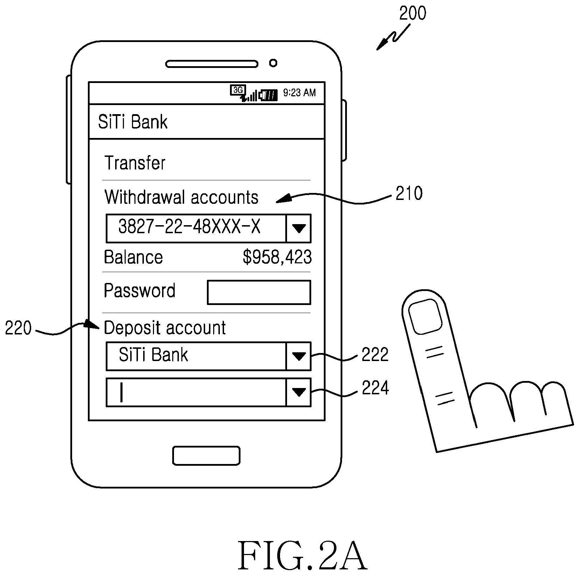

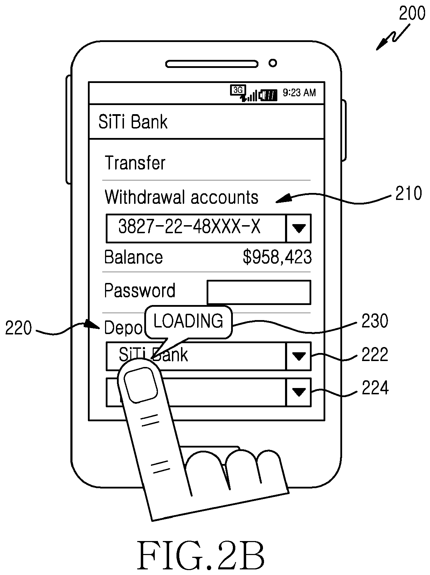

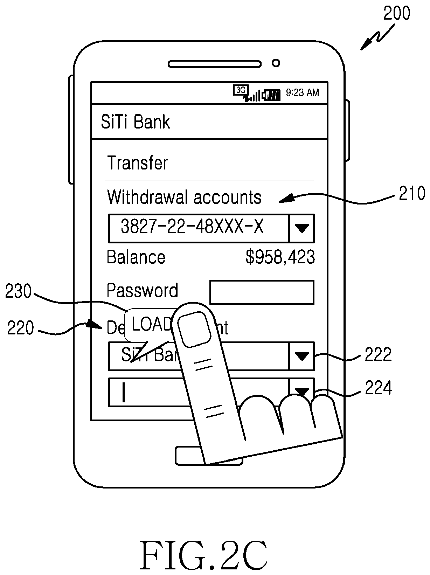

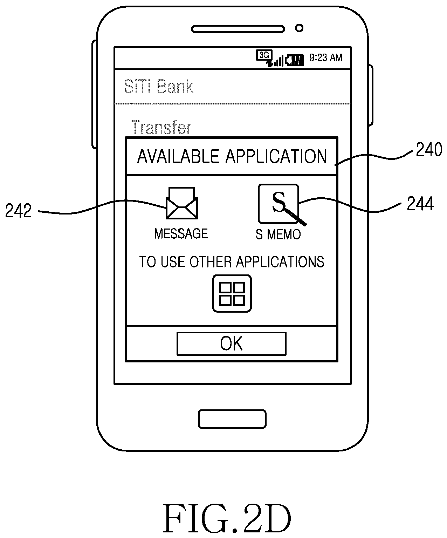

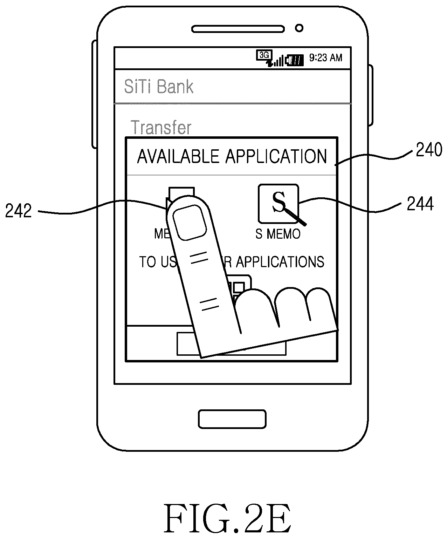

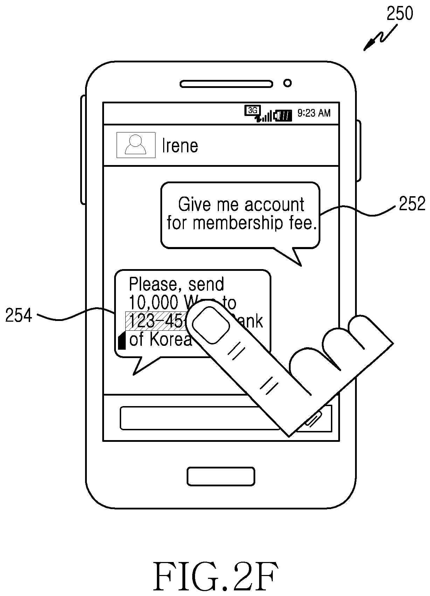

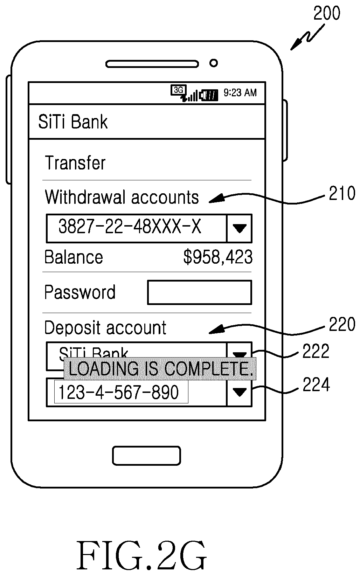

FIGs. 2A to 2G are diagrams depicting an example of a user interface for performing a copy/paste function according to aspects of the present disclosure. A case where a bank account is copied and pasted in a homepage of a certain bank is taken for example in FIG. 2. More particularly, FIG. 2A illustrates a screen 200 through which an account transfer is performed after logging in a homepage of a specific bank. The screen 200 includes a withdrawal account section 210 which identifies an account from which money is to be withdrawn. The screen 200 also includes a deposit account section 220 which identifies an account where the money is to be deposited. The deposit account section 220 includes an input field 222 where a bank identifier is input. In addition, the deposit account section 220 includes an input field 224 where a bank account number is input.

FIG. 2B illustrates an example of the operation of a "Loading" function, according to aspects of the disclosure. The "Loading" function may be executed based on a gesture for loading information. As illustrated in FIG. 2B, a touch may be maintained on the input field 224 and in response, an indication 230 associated with the "Loading" function can be displayed. Although in this example, the indication is a pop-up message, in other implementations any suitable type of input component may be used as an indication of the "Loading" function.

For example, the indication 230 of the "Loading" function may be displayed when a cursor is positioned in the input field 224 and a touch is maintained for a specific time in any area of the screen. The area of the screen where the touch is maintained may be an area close to the cursor's position. According to another example, the gesture is not limited to the touch action maintained for the specific time in the any area of the screen, and thus the gesture may be an action of pressing a soft key or a hard key to display the indication 230 of the "Loading" function.

In FIG. 2C, the indication 230 of the "Loading" function is selected.

In FIG. 2D, in response to the indication 230 of the "Loading" function being selected, an application list 240 is displayed. The application list may include any suitable indication of one or more applications. For example, the application list 240 may be a list of applications currently being executed in a background or may be a list of applications related to an attribute (e.g. a characteristic) of at least one of: (1) the field where the gesture triggering the display of the indication 230 is performed or (2) the field where a cursor is located where the gesture triggering the display of the indication 230 is performed. In the present example, the application list 240 may be generated based on an attribute (*e.g*. a characteristic) of the input field 224.

For example, if the to-be-pasted object is a text, applications related to the text are displayed. As another example, if the attribute of to-be-pasted object is an image, applications related to image processing are displayed. In the present example, because the filed 224 is a text field, applications related to text editing are included in the application list 240. In particular, identifiers for applications 242 and 244 can be included in the list. Application 242 may be a messaging application and application 244 may be an application for drafting memos.

In FIG. 2E, application 242 is selected from the application list 240.

In FIG. 2F, in response to the selection of application 242 from the list, a screen 250 of the application 242 is displayed. The screen includes a message 252 and a message 254. As illustrated, the message 254 includes a bank account number. When the message 254 is displayed, a user may perform a drag (and/or any other suitable gesture) on a part of the message corresponding to the bank account number "123-4-567-890".

In FIG. 2G, in response to the gesture, the bank account number is copied into the input field 224 of the screen 200. In the present example, in response to the gesture: (1) the bank account is copied into memory, (2) the screen 250 is removed from display and the screen 200 is displayed in its place, and (3) the bank account number is pasted at a predetermined location. Thus, in some implementations, the gesture may serve at the same time as a copy instruction, a paste instruction, and a "change screens" instruction. In some implementations, the predetermined location may be: (1) the location where a cursor is located when the gesture triggering display of the indication 230 of the "Loading" function is performed, (2) the location where when the gesture triggering display of the indication 230 of the "Loading" function is performed, and/or any other suitable location in the screen 200.

More specifically, when the drag of the bank account number "123-4-567-890" is released, the screen displayed on the electronic device is automatically changed from the screen 250 to the screen 200, and the bank account number "123-4-567-890" is displayed at the position of the cursor in the input field 224 of. Thus, in one example, when an object to be copied is dragged in one application screen and the drag is released, the object may be pasted at a cursor position in the screen of another application in response to the release of the drag.

Additionally or alternatively, when an object is dragged and a "Copy" function is executed for the dragged object, a paste function is executed for a cursor position of a previous application.

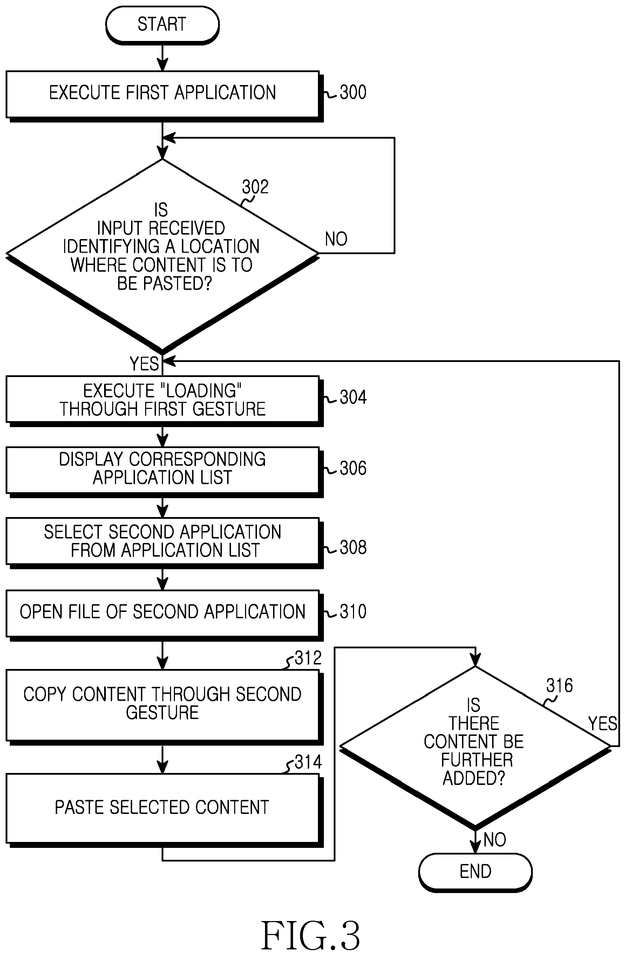

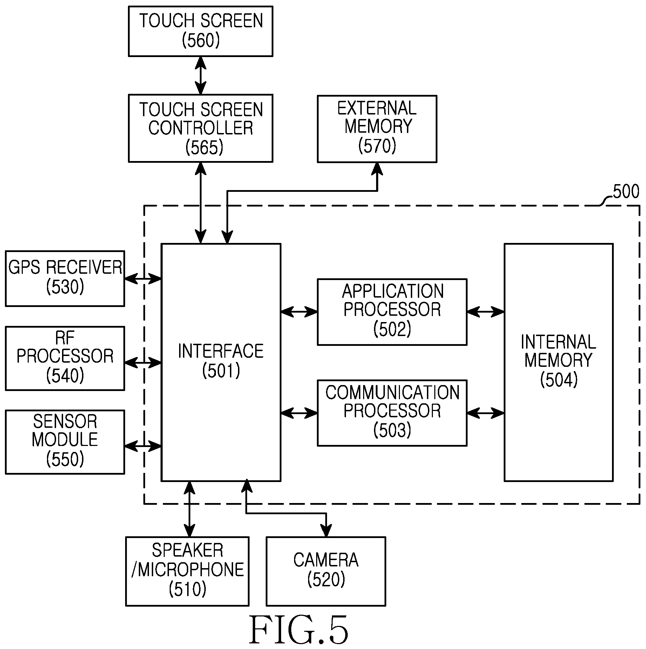

As described above, instead of a position of an object to be copied, "Loading" may be executed by using an option menu at a point of an object to be pasted. In this case, an application existing in a background or applications related to a field attribute of the point of the object are displayed, and the application is selected to drag data to be copied. In addition, when original data is copied, the application is changed to a previous application which executes the loading, and dragged or copied data is automatically pasted at a corresponding cursor position. By moving to a position at which a task is performed by an application before the copy, the previous task may be maintained. FIG. 3 is a flowchart of an example of a process according to aspects of the disclosure. The process may be performed by any suitable type of electronic device, such as the electronic device depicted in FIGS 2A-G and/or the electronic device depicted in FIG. 5.

Referring to FIG. 3, an electronic device executes a first application in step 300. If it is determined in step 302 that an input identifying a location where content is to be pasted (*e.g.,* a paste position), the procedure proceeds to step 304.

In step 304, the electronic device begins execution of the "Loading" function in response to a first gesture (*e.g.,* a touch). In the present example, the first gesture includes an action of maintaining a touch for a predetermined time period at any point of the screen of the first application.

In step 306, according to the "Loading" function, the electronic device displays a list of applications in related to an attribute corresponding to the paste position (see FIG. 2D). In some implementations, the list may include only application that are currently running the background of the electronic device performing the process. In other implementations, the list may include any of the applications installed on the electronic device. For example, if the attribute of the paste position is a text, an application related to the text is displayed, and if the attribute of the paste position is an image, an application related to the image is displayed.

In step 308, a second application is selected from the application list (see FIG. 2E). In some implementations, the second application may be an application capable of opening and modifying one or more files including content to be copied.

In step 310, the electronic device opens one or more files including the content to be copied by using the second application. In some implementations, a default file may be opened (*e.g.,* a file containing the messages 252 and 254). In other implementations the file may be specified by the user. For example, if the number of files of the second application is greater than or equal to two, the file list is displayed and one of the files is selected from the file list by a user input.

In step 312, the electronic device copies a content that is included in one of the files in response to the initiation of a second gesture. By way of example, and without limitation, the content may include a character string, data, and/or any other suitable type of content. For example, if the content to be copied is text, a message application related to the text is displayed and selected, and when the content to be copied is displayed in a message is displayed, is the content can be touched and dragged (see FIG. 2F).

In step 314, when the second gesture is completed (*e.g*. when the touch-and-drag of the content is released), the electronic device pastes the content at the paste position specified at step 302 and the screen of the first application is displayed in place of the screen of the second application (see FIG. 2E).

If it is determined in step 316 that additional information needs to be pasted at the paste position, the procedure returns to step 304. Otherwise, the procedure of FIG. 3 ends.

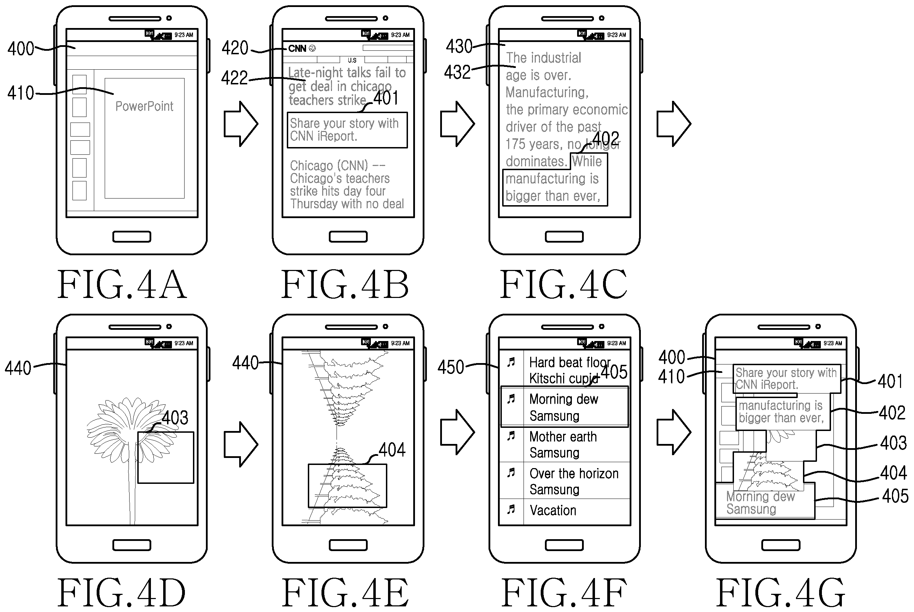

FIGs. 4A to 4G are diagrams depicting an example of a user interface for performing a copy/paste function according to aspects of the present disclosure.

Referring to FIGs. 4A to 4G, when a document editor 400 (e.g., a power point editor) (see FIG. 4A) copies and pastes data obtained from a plurality of different applications into a document 410 that is being edited by the document editor. The copying and pasting may be performed by using the "Loading" function discussed with respect to FIGs. 2A-G and 4A-G.

For example, a webpage 422 can be displayed in a web browser 420 after the "Loading" function is invoked with respect to a particular point (*e.g.,* a paste position) in the document 410. When a text 401 in the webpage 422 is touched and dragged, the text 401 can be automatically copied (see FIG. 4B), and when the touch is released, the text 401 can be pasted at the particular point in the document 410. Alternatively, in some implementations, the text 401 in the webpage 422 may be copied only when an additional copy instruction is executed after the text 401 is touched and dragged.

After the text 401 is copied at the particular point in the document 410, a document editor 430 is displayed in which a document 432 is opened. When a text 402 of the document 432 is touched and dragged, the text 402 is automatically copied (see FIG. 4C), and when the touch is released, the text 402 is pasted at the particular point in the document 410.

After the text 402 is copied, an image editor 440 can be executed to display a photo 1. When an area 403 of the photo 1 is touched and dragged, the area 403 of the photo 1 is automatically copied (see FIG. 4D), and when the touch is released, the area 403 of the photo 1 is pasted at the particular point in the document 410.

After the area 403 of the photo 1 is copied, the image editor 440 is executed to display a photo 2. When an area 404 of the photo 2 is touched and dragged, the area 404 of the photo 2 is automatically copied (see FIG. 4E), and when the touch is released, the area 404 of the photo 2 is pasted at the particular point in the document 410.

After the area 404 of the photo 2 is copied, a file explorer or a music player 450 is executed to display a music list 452. When any one music file 405 in the music list is touched for specific time, the music file 405 is automatically copied (see FIG. 4F), and when the touch is released, the touched music file 405 is pasted at the particular point in the document 410.

FIG. 4G illustrates a screen of the document editor 400 (e.g., a power point editor) (see FIG. 4A) after the copying of the file is complete. As illustrated, the document 410 includes content items 401, 402, 403, 404, and 405 that were copied into the document 410, as discussed above.

In some implementations, after content is copied from the screen of one of the applications 420, 430, 440, and 450 into the screen of the editor 400, a prompt can be displayed asking the user whether he/she would like to copy and paste another content item into the screen of the editor 400. If the user answers in the affirmative, an application list, such as the application list 240, may be displayed and the user may select another application from the list. Once the application is selected, a screen of the application may be displayed, thereby permitting the user to copy any of the content that is included in the displayed screen.

Conventionally, the copy/paste function is performed on the basis of a position of an object to be copied, and thus if the five applications are subjected to the copy/paste function, a screen must be changed 11 times, and the copy/paste function must be performed 10 times. However, the copy/paste function is performed on the basis of a position of an object to be pasted in the present invention, and thus the screen is changed only 6 times and a sending function is performed only 5 times.

FIG. 5 is a block diagram of an example of an electronic device according to aspects of the present disclosure.

The electronic device may configured to implement any of the techniques described with respect to FIGS. 2A-4G. The electronic device may be a portable electronic device, and may be a device such as a portable terminal, a mobile phone, a mobile pad, a media player, a tablet computer, a handheld computer, or a Personal Digital Assistant (PDA). In addition, it may be any portable electronic device including a device which combines two or more functions among these devices. Additionally or alternatively, the electronic device may be a desktop computer, and/or any other non-portable electronic device. Stated succinctly, the electronic device may be any suitable type of electronic device.

Referring to FIG. 5, the electronic device includes a controller 500, a speaker/microphone 510, a camera 520, a Global Positioning System (GPS) receiver 530, a Radio Frequency (RF) processor 540, a sensor module 550, a touch screen 560, a touch screen controller 565, and an extended memory 570.

The controller 500 may include an interface 501, one or more processors 502 and 503, and an internal memory 504. Optionally, the entire part of the controller 500 may be referred to as a processor. The interface 501, the application processor 502, the communication processor 503, and the internal memory 504 may be separate components or may be integrated in one or more integrated circuits.

The application processor 502 performs various functions for the electronic device by executing a variety of software programs. The communication processor 503 processes and controls voice communication and data communication. In addition to such a typical function, the processors 502 and 503 also take a role of executing a specific software module (i.e., an instruction set) stored in the extended memory 570 or the internal memory 504 and thus performing various specific functions corresponding to the module. That is, the processors 502 and 503 perform the copy/paste method of the present disclosure by interworking with software modules stored in the extended memory 570 or the internal memory 504.

For example, the application processor 502 executes a first application, and if a character string, data, a file, an image object, or the like in different applications is added by pasting it at a particular point in the first application currently being executed, executes the "Loading" function to open an application including an object to be copied by using a first gesture. Herein, the first gesture implies an action of maintaining a touch during a specific time at any point of a screen. The application processor 502 displays a list of applications in a background or a list of applications related to a field attribute corresponding to a paste position, selects a second application from the application list, opens the file including the object to be copied by using the second application, and copies (*e.g.,* loads into memory) a character string, data, or object to be pasted from a content of a file by using a touch drag. When a touch-and-drag is released, the application processor 502 pastes an object dragged to a particular point (e.g., a paste position) of the first application after changing to the first application.

Meanwhile, another processor (not shown) may include one or more data processors, image processors, or codecs. The data processor, the image processor, or the codec can be configured separately. In addition, these elements may be constructed with several processors each of which performs a different function. The interface 501 is connected to the touch screen controller 565 of the electronic device and the external memory 570.

The sensor module 550 coupled to the interface 501 may enable various functions. For example, a motion sensor and an optical sensor may be coupled to the interface 501 to respectively enable motion sensing and external light-beam sensing. In addition thereto, other sensors such as a location measurement system, a temperature sensor, a biometric sensor, or the like may be coupled to the interface 501 to perform related functions.

The camera 520 is coupled to the sensor module 550 via the interface 501, and may perform a camera function such as photographing, video clip recording, etc.

The RF processor 540 performs a communication function. For example, an RF signal is converted to a baseband signal under the control of the communication processor 503, and is then provided to the communication processor 503, or a baseband signal from the communication processor 503 is transmitted by being converted into an RF signal. Herein, the communication processor 503 processes the baseband signal by using various communication schemes. For example, although not limited thereto, the communication scheme may include a Global System for Mobile Communication (GSM) communication scheme, an Enhanced Data GSM Environment (EDGE) communication scheme, a Code Division Multiple Access (CDMA) communication scheme, a W-Code Division Multiple Access (W-CDMA) communication scheme, a Long Term Evolution (LTD) communication scheme, an Orthogonal Frequency Division Multiple Access (OFDMA) communication scheme, a Wireless Fidelity (Wi-Fi) communication scheme, a WiMax communication scheme, and/or a Bluetooth communication scheme.

The speaker/microphone 510 may input and output an audio stream such as voice recognition, voice reproduction, digital recording, and telephony functions. That is, the speaker/microphone 510 converts an audio signal into an electronic signal or converts the electronic signal into the voice signal. Although not shown, an attachable and detachable ear phone, headphone, or headset can be connected to the electronic device via an external port.

The touch screen controller 565 may be coupled to the touch screen 560. Although not limited thereto, the touch screen 560 and the touch screen controller 565 may use not only capacitance, resistance, infrared and surface sound wave techniques for determining one or more contact points but also any multi-touch sense technique including other proximity sensor arrays or other elements to detect a contact and movement or stopping thereof.

The touch screen 560 provides an input/output interface between the electronic device and the user. That is, the touch screen 560 delivers a touch input of the user to the electronic device. In addition, the touch screen 560 is a medium which shows an output from the electronic device to the user. That is, the touch screen shows a visual output to the user. Such a visual output is represented in the form of a text, a graphic, a video, and a combination thereof.

A variety of displays may be used as the touch screen 560. For example, although not limited thereto, the touch screen 560 may include a Liquid Crystal Display (LCD), a Light Emitting Diode (LED), a Light Emitting Polymer Display (LPD), an Organic Light Emitting Diode (OLED), an Active Matrix Organic Light Emitting Diode (AMOLED), or a Flexible LED (FLED).

The GPS receiver 530 converts a signal received from a satellite into information of a location, a speed, a time, etc. For example, a distance between the satellite and the GPS receiver is calculated by multiplying a speed of light by a signal arrival time, and a location of the electronic device is measured according to a principle of a well-known triangulation by obtaining a distance and a correct location of three satellites.

The extended memory 570 or the internal memory 504 may include a fast random access memory such as one or more magnetic disc storage devices and/or a nonvolatile memory, one or more optical storage devices, and/or a flash memory (e.g., NAND, NOR).

The extended memory 570 or the internal memory 504 stores a software component. The software component includes an operating system software module, a communication software module, a graphic software module, a user interface software module, a Moving Picture Experts Group (MPEG) module, a camera software module, one or more application software modules, etc. In addition, since a module, i.e., a software component, can be expressed as a group of instructions, the module can also be expressed as an instruction set. The module is also expressed as a program.

The operating system software includes various software components for controlling a general system operation. The control of the general system operation includes memory management and control, storage hardware (device) control and management, power control and management, etc. In addition, the operating system software performs a function for facilitating communication between various hardware elements (devices) and software elements (modules).

The communication software module may enable communication with other electronic devices such as a computer, a server, and/or a portable terminal via the RF processor 540. Further, the communication software module is constructed with a protocol structure conforming to a corresponding communication scheme.

The graphic software module includes various software components for providing and displaying graphics on the touch screen 560. The terminology of "graphics" indicates a text, a web page, an icon, a digital image, a video, an animation, etc.

The user interface software module includes various software components related to the user interface. The user interface software module includes the content related to a specific state to which the user interface changes and a specific condition in which the state of the user interface changes.

The camera software module includes a camera-related software component which enables camera-related processes and functions. The application module includes a browser including a rendering engine, an e-mail, an instant message, word processing, keyboard emulation, an address book, a touch list, a widget, a Digital Right Management (DRM), voice recognition, voice reproduction, a location determining function, a location-based service, etc. The memories 570 and 504 may further include additional modules (instructions) in addition to the aforementioned modules. Alternatively, optionally, some of the modules (instructions) may not be used.

The application module of the present disclosure includes instructions (see FIG. 3) for controlling a particular object in a webpage.

The techniques described with respect to FIGS. 2-4 may be implemented in software, as one or more processor-executable instructions that are executed by the controller 500. Additionally or alternatively, the techniques described with respect to FIGS. 2-4 may be implemented in hardware, by using a Field-Programmable Gate Array (FPGA), an Application-Specific Integrated Circuit (ASIC), and/or any other suitable electronic circuitry. Additionally or alternatively, the techniques may be implemented as a combination of software and hardware.

Although in the above examples, the copying and/or pasting of content is performed in response to touch gestures, it will be understood that any suitable type of input can be used to trigger or invoke the operations discussed above. For example, mouse input, and/or performed by any other suitable input device (*e.g*., keyboard, joystick, trackball, and stylus) can be used instead of touch input. Moreover, the term gesture should be construed broadly to encompass any possible type of input, including a single touch or a tap.

Furthermore, it should be noted that the processes presented herein are provided only as example. At least some of the steps in those processes may be performed in a different order, performed concurrently, or altogether omitted.
The above-described aspects of the present disclosure can be implemented in hardware, firmware or via the execution of software or computer code that can be stored in a recording medium such as a CD ROM, a Digital Versatile Disc (DVD), a magnetic tape, a RAM, a floppy disk, a hard disk, or a magneto-optical disk or computer code downloaded over a network originally stored on a remote recording medium or a non-transitory machine readable medium and to be stored on a local recording medium, so that the methods described herein can be rendered via such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein. Any of the functions and steps provided in the Figures may be implemented in hardware, software or a combination of both and may be performed in whole or in part within the programmed instructions of a computer. No claim element herein is to be construed under the provisions of 35 U.S.C. 112, sixth paragraph, unless the element is expressly recited using the phrase "means for".

While the present disclosure has been particularly shown and described with reference to exemplary aspects thereof, it will be understood by those skilled in the art that various changes in form and details may be made therein without departing from the scope of the present disclosure as defined by the appended claims.

## Claims

1. A method comprising:
detecting a first gesture performed while a cursor is placed in an input field in a first application;
displaying (306) an application list in response to the first gesture, wherein the application list is displayed based on an attribute of the input field and includes applications that are capable of rendering content that the input field is configured to accept;
detecting (308) a selection of a second application from the application list;
opening (310) a first file with the second application and displaying a content of the first file;
detecting a second gesture being performed on a portion of the content of the first file; and
inserting the portion of the content of the first file into the input field of the first application.

2. The method of claim 1, wherein the second gesture includes one of a touch and a drag.

3. The method of claim 1, wherein the displaying (306) of the application list comprises displaying an input component in response to the first gesture, wherein the application list is displayed in response to the input component being selected.

4. The method of claim 1, further comprising:
outputting a query asking a user whether additional content needs to be inserted into the input field;
displaying the application list;
detecting a selection of a third application from the application list;
opening a second file with the third application and displaying a content of the second file;
detecting the second gesture being performed on a portion of the content of the second file; and
inserting the portion of the content of the second file into the input field.

5. An electronic device comprising a processor configured to:
detect a first gesture performed while a cursor is placed in an input field in a first application;
display (306) an application list in response to the first gesture, wherein the application list is displayed based on an attribute of the input field and includes applications that are capable of rendering content that the input field is configured to accept;
detect (308) a selection of a second application from the application list;
opening (310) a first file with the second application and displaying a content of the first file;
detect a second gesture being performed on a portion of the content of the first file; and
insert the portion of the content of the first file into the input field of the first application.

6. The electronic device (200) of claim 5, wherein the second gesture includes one of a touch and a drag.

7. The electronic device (200) of claim 5, wherein the processor is configured to display(306) the application list including an input component in response to the first gesture in response to the input component being selected.

8. The electronic device (200) of claim 5, wherein the processor is further configured to:
output a query asking a user whether additional content needs to be inserted into the input field;
display the application list;
detect a selection of a third application from the application list;
open a second file with the third application and displaying a content of the second file;
detect the second gesture being performed on a portion of the content of the second file; and
insert the portion of the content of the second file into the input field.

## Patentansprüche

1. Verfahren, umfassend:
Erfassen einer ersten Geste, die ausgeführt wird, während ein Cursor in einer ersten Anwendung in einem Eingabefeld platziert ist,
Anzeigen (306) einer Anwendungsliste in Reaktion auf die erste Geste, wobei die Anwendungsliste auf Basis eines Kennzeichens des Eingabefeldes angezeigt wird und Anwendungen aufweist, die geeignet sind, einen Inhalt zu erbringen, für dessen Übernahme das Eingabefeld eingerichtet ist,
Ermitteln (308) einer Auswahl einer zweiten Anwendung aus der Anwendungsliste,
Öffnen (310) einer ersten Datei mit der zweiten Anwendung und Anzeigen eines Inhalts der ersten Datei,
Erfassen einer zweiten Geste, die auf einem Teil des Inhalts der ersten Datei ausgeführt wird, und
Einsetzen des Teils des Inhalts der ersten Datei in das Eingabefeld der ersten Anwendung.

2. Verfahren nach Anspruch 1, wobei die zweite Geste eines von einer Berührung und einem Ziehen aufweist.

3. Verfahren nach Anspruch 1, wobei das Anzeigen (306) der Anwendungsliste ein Anzeigen einer Eingabekomponente in Reaktion auf die erste Geste umfasst, wobei die Anwendungsliste in Reaktion auf die Eingabekomponente, die ausgewählt wird, angezeigt wird.

4. Verfahren nach Anspruch 1, ferner umfassend:
Ausgeben einer Anfrage, mit der ein Benutzer gefragt wird, ob zusätzliche Komponenten in das Eingabefeld eingesetzt werden müssen,
Anzeigen der Anwendungsliste,
Ermitteln einer Auswahl einer dritten Anwendung aus der Anwendungsliste,
Öffnen einer zweiten Datei mit der dritten Anwendung und Anzeigen eines Inhalts der zweiten Datei,
Erfassen einer zweiten Geste, die auf einem Teil des Inhalts der zweiten Datei ausgeführt wird, und
Einsetzen des Teils des Inhalts der zweiten Datei in das Eingabefeld.

5. Elektronische Vorrichtung mit einem Prozessor, der eingerichtet ist zum::
Erfassen einer ersten Geste, die ausgeführt wird, während ein Cursor in einer ersten Anwendung in einem Eingabefeld platziert ist,
Anzeigen (306) einer Anwendungsliste in Reaktion auf die erste Geste, wobei die Anwendungsliste auf Basis eines Kennzeichens des Eingabefeldes angezeigt wird und Anwendungen aufweist, die geeignet sind, einen Inhalt zu erbringen, für dessen Übernahme das Eingabefeld eingerichtet ist,
Ermitteln (308) einer Auswahl einer zweiten Anwendung aus der Anwendungsliste,
Öffnen (310) einer ersten Datei mit der zweiten Anwendung und Anzeigen eines Inhalts der ersten Datei,
Erfassen einer zweiten Geste, die auf einem Teil des Inhalts der ersten Datei ausgeführt wird, und
Einsetzen des Teils des Inhalts der ersten Datei in das Eingabefeld der ersten Anwendung.

6. Elektronische Vorrichtung (200) nach Anspruch 5, wobei die zweite Geste eines von einer Berührung und einem Ziehen aufweist.

7. Elektronische Vorrichtung (200) nach Anspruch 5, wobei der Prozessor eingerichtet ist, die Anwendungsliste, die eine Eingabekomponente aufweist, in Reaktion auf die Eingabekomponente, die ausgewählt wird, in Reaktion auf die erste Geste anzuzeigen (306).

8. Elektronische Vorrichtung (200) nach Anspruch 5, wobei der Prozessor ferner eingerichtet ist zum:
Ausgeben einer Anfrage, mit welcher ein Benutzer gefragt wird, ob zusätzliche Komponenten in das Eingabefeld eingesetzt werden müssen,
Anzeigen der Anwendungsliste,
Ermitteln einer Auswahl einer dritten Anwendung aus der Anwendungsliste,
Öffnen einer zweiten Datei mit der dritten Anwendung und Anzeigen eines Inhalts der zweiten Datei,
Erfassen einer zweiten Geste, die auf einem Teil des Inhalts der zweiten Datei ausgeführt wird, und
Einsetzen des Teils des Inhalts der zweiten Datei in das Eingabefeld.

## Revendications

1. Procédé comprenant :
la détection d'un premier geste effectué pendant qu'un curseur est placé dans un champ d'entrée dans une première application ;
l'affichage (306) d'une liste d'applications en réponse au premier geste, dans lequel la liste d'applications est affichée sur la base d'un attribut du champ d'entrée et comprend des applications capables d'effectuer le rendu d'un contenu que le champ d'entrée est configuré pour accepter ;
la détection (308) d'une sélection d'une deuxième application dans la liste d'applications ;
l'ouverture (310) d'un premier fichier avec la deuxième application et l'affichage d'un contenu du premier fichier ;
la détection d'un deuxième geste effectué sur une portion du contenu du premier fichier ; et
l'insertion de la portion du contenu du premier fichier dans le champ d'entrée de la première application.

2. Procédé selon la revendication 1, dans lequel le deuxième geste comprend l'un d'un toucher et d'un glissement.

3. Procédé selon la revendication 1, dans lequel l'affichage (306) de la liste d'applications comprend l'affichage d'un composant d'entrée en réponse au premier geste, dans lequel la liste d'applications est affichée en réponse à la sélection du composant d'entrée.

4. Procédé selon la revendication 1, comprenant en outre :
la sortie d'une interrogation demandant à un utilisateur si un contenu supplémentaire doit être inséré dans le champ d'entrée ;
l'affichage de la liste d'applications ;
la détection d'une sélection d'une troisième application dans la liste d'applications ;
l'ouverture d'un deuxième fichier avec la troisième application et l'affichage d'un contenu du deuxième fichier ;
la détection du deuxième geste effectué sur une portion du contenu du deuxième fichier ; et
l'insertion de la portion du contenu du deuxième fichier dans le champ d'entrée.

5. Dispositif électronique comprenant un processeur configuré pour effectuer :
la détection d'un premier geste effectué pendant qu'un curseur est placé dans un champ d'entrée dans une première application ;
l'affichage (306) d'une liste d'applications en réponse au premier geste, dans lequel la liste d'applications est affichée sur la base d'un attribut du champ d'entrée et comprend des applications capables d'effectuer le rendu d'un contenu que le champ d'entrée est configuré pour accepter ;
la détection (308) d'une sélection d'une deuxième application dans la liste d'applications ;
l'ouverture (310) d'un premier fichier avec la deuxième application et l'affichage d'un contenu du premier fichier ;
la détection d'un deuxième geste effectué sur une portion du contenu du premier fichier ; et
l'insertion de la portion du contenu du premier fichier dans le champ d'entrée de la première application.

6. Dispositif électronique (200) selon la revendication 5, dans lequel le deuxième geste comprend l'un d'un toucher et d'un glissement.

7. Dispositif électronique (200) selon la revendication 5, dans lequel le processeur est configuré pour effectuer l'affichage (306) de la liste d'applications comprenant un composant d'entrée en réponse au premier geste en réponse à la sélection du composant d'entrée.

8. Dispositif électronique (200) selon la revendication 5, dans lequel le processeur est en outre configuré pour effectuer :
la sortie d'une interrogation demandant à un utilisateur si un contenu supplémentaire doit être inséré dans le champ d'entrée ;
l'affichage de la liste d'applications ;
la détection d'une sélection d'une troisième application dans la liste d'applications ;
l'ouverture d'un deuxième fichier avec la troisième application et l'affichage d'un contenu du deuxième fichier ;
la détection du deuxième geste effectué sur une portion du contenu du deuxième fichier ; et
l'insertion de la portion du contenu du deuxième fichier dans le champ d'entrée.
